# FASCICULE DE BREVET EUROPEEN

(11) **EP 3 047 720 B1**
(45) Date de publication et mention de la délivrance du brevet: **12.12.2018**
(21) Numéro de dépôt: 16151043.3
(22) Date de dépôt: 13.01.2016
(51) Int. Cl.: A01G 3/02, B26B 13/16

(54) **OUTIL COUPANT A LAMES ROTATIVES DU TYPE SECATEUR**
GARTENSCHERE
CUTTING TOOL WITH ROTARY BLADES SUCH AS SHEARS

(30) Priorité: 22.01.2015 FR 1550522
(43) Date de publication de la demande: 27.07.2016
(73) Titulaire: Opinel, 73000 Chambery (FR)
(72) Inventeur: Opinel, Denis, 73000 Chambéry (FR)
(74) Mandataire: Champain, Christophe

(56) Documents cités:
- EP-A1- 0 394 851
- WO-A1-99/07525
- FR-A1- 3 002 112
- US-A1- 2007 266 568
- US-A1- 2013 091 713

## Description

L'invention concerne un outil coupant, muni de deux lames à bord tranchant, articulées en rotation autour d'un axe commun, chaque lame étant prolongée par une poignée, de manière que l'outil puisse être saisi d'une seule main.

Ce type d'outil est basé sur le principe des ciseaux, et en l'espèce l'invention concerne plus particulièrement les outils dénommés sécateurs et destinés à sectionner des objets longilignes tels que des branches, tiges, ou autre élément végétal.

Les sécateurs connus présentent une ouverture maximale limitée, entre les bords tranchants des lames opposés l'un à l'autre. Ceci est rendu nécessaire par le fait que les sécateurs sont tenus d'une seule main.

Par ailleurs, afin de faciliter l'utilisation, les sécateurs connus sont munis d'un organe de rappel, généralement sous la forme d'un ressort, qui tend à écarter les lames vers la position d'ouverture maximale.

Ainsi, dans la position de départ, l'ouverture des lames est maximale, et l'utilisateur exerce une pression sur les poignées de manière à les rapprocher l'une de l'autre, ce qui provoque le rapprochement des bords tranchants, en sectionnant l'élément à couper.

Les sécateurs comportent ainsi deux positions extrêmes, à savoir une position fermée où les lames sont en contact ou en chevauchement partiel (il est généralement prévu des moyens de blocage temporaire en cette position), et une position d'ouverture maximale où les lames sont écartées pour définir un espace dans lequel est inséré l'élément à sectionner. La demande de brevet US 2013/0091713 montre un sécateur, pourvu d'un moyen de blocage temporaire des lames et des poignées, en une position intermédiaire entre les positions d'ouverture maximale et de fermeture.

Les sécateurs connus soulèvent deux problèmes. Le premier est lié au ressort de rappel (écartant les lames l'une de l'autre) qui est exposé, ce qui peut entraîner l'enlèvement intempestif ou la détérioration du ressort. De plus ce dernier est exposé aux poussières, à l'eau, ce qui risque de l'endommager. Le second problème est lié à l'ergonomie. En effet, l'écartement maximal des lames est conçu pour définir une ouverture maximale, afin de permettre de sectionner des éléments longilignes de grande taille. Or, dans le domaine d'utilisation agricole ou de jardinage, les éléments végétaux à sectionner sont de tailles et de résistance très variables.

Il en résulte que l'utilisateur doit tenir constamment le sécateur dans une position d'écartement maximal des poignées au repos, ou alors, si des éléments de plus petit diamètre sont à couper, il doit exercer une pression permanente pour rapprocher les lames en une position d'ouverture intermédiaire, afin de tenir le sécateur prêt. Ceci est inconfortable. En outre, les utilisateurs possédant des mains de petite taille sont obligés d'exercer cette pression en permanence pour maintenir les poignées dans une position intermédiaire correspondant à leur morphologie.

Ainsi, l'invention propose un sécateur qui ne présente pas ces inconvénients, et qui d'une part comporte des moyens de rappel protégés, et d'autre part présente une ergonomie améliorée, notamment pour les utilisateurs/trices présentant des mains de petite taille, et en outre facilite d'utilisation la coupe d'éléments longilignes de plus petit diamètre.

Selon l'invention, l'outil coupant, du type sécateur, muni de deux lames à bord tranchant, articulées en rotation autour d'un axe commun, chaque lame étant prolongée par une poignée, de manière que l'outil puisse être saisi d'une seule main, est caractérisé en ce qu'il comporte des moyens de blocage temporaire des lames et des poignées correspondantes, en au moins une position intermédiaire entre la position d'ouverture maximale, et la position de fermeture où les bords tranchants des lames sont en contact ou en chevauchement partiel.

Ainsi, l'ergonomie se trouve améliorée soit pour les utilisateurs/trices ayant des petites mains, soit pour tout utilisateur, qui envisage de sectionner des éléments longilignes de petit diamètre, et de diamètre sensiblement inférieur à celui correspondant à l'ouverture maximale des lames.

Lesdits moyens de blocage temporaire comportent un élément de blocage monté sur une première des deux lames (ou une première poignée), mobile en fonction de la rotation de la seconde lame, et dont une extrémité est pourvue d'un doigt flexible et apte à coopérer avec des premiers éléments de butée prévus sur la première lame ou poignée, chaque premier élément de butée correspondant à une des positions d'ouverture lames/poignées, de préférence trois positions, respectivement maximale, intermédiaire et fermée.

De préférence, une série de trois jeux successifs de creux/bosse sont prévus, chacun correspondant à une position d'ouverture des lames.

Les moyens de blocage sont mis en place vis-à-vis de l'élément de butée choisi
- automatiquement
- par l'action d'un doigt de l'utilisateur

Avantageusement, les premiers éléments de butée forment des indentations définissant une série de creux et de bosses, ledit doigt flexible étend apte à coopérer avec un jeu d'un creux et la bosse attenante.

Selon l'invention, l'élément mobile de blocage présente à l'une de ses extrémités (opposée à la poignée) un doigt coopérant avec des seconds éléments de butée, solidaires de la seconde lame (ou seconde poignée).

Les seconds éléments de butée forment des éléments d'engagement mutuel avec l'extrémité de l'élément mobile de blocage, de préférence l'extrémité de l'élément mobile de blocage formant une partie mâle, tandis que les seconds éléments de butée forment des encoches, de préférence trois encoches, correspondant chacune à une position des lames/poignées.

Ledit élément de blocage, monté mobile sur une première des deux lames (ou une première poignée), possède un degré unique de translation, de direction d'une part transversal à l'axe d'articulation des lames/poignées, et d'autre part sensiblement dans la direction longitudinale de la première lame/poignée.

Plus précisément, ledit élément de butée :
- est associé à une rainure définissant la direction de translation dudit élément de blocage longitudinale, et
- comporte un coulisseau de forme complémentaire à la rainure et apte à n'autoriser qu'un mouvement de translation dudit élément mobile de blocage.

Le coulisseau présente deux faces parallèles de contact avec les parois opposées de la rainure.

Les moyens de rappel sont disposés entre les lames et à proximité de l'axe de rotation de ces dernières.

Ainsi, les moyens de rappels ne sont pas exposés aux poussières, à l'humidité, et on évite en outre tout risque d'enlèvement intempestif.

Enfin, au moins l'une des poignées comporte en saillie et dans une zone proche des lames, un élément d'appui pour le pouce de la main de l'utilisateur.

Dans la suite de la description, les qualificatifs « supérieur », « inférieur », « haut » et « bas », d'un élément sont utilisés dans le cadre d'une installation normale du sécateur pris en main par l'utilisateur. Les termes « proximal » et distal » sont utilisés pour situer un élément par rapport à l'utilisateur.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue de côté d'un sécateur de l'invention ;
- La figure 2 représente une vue en perspective arrière de côté du sécateur de la figure 1 ;
- Les figures 3, 4 et 5 montrent le sécateur de la figure 1, vu de l'autre côté, et selon trois positions respectives des lames/poignées ;
- La figure 6, 7 et 8 sont des vues de détail des moyens de blocage temporaire, selon les trois positions respectives des figures 1 à 3 ;
- La figure 9 est une vue en perspective éclatée du sécateur.

Le sécateur 1 de l'invention, illustré sur les figures, comporte, de manière connue, une première lame 2 en forme de bec de canard, associée à une première poignée 3, et une seconde lame 4 de forme complémentaire à la première, associée à une seconde poignée 5. La première lame 2 et la première poignée 3 sont reliées par une première zone commune de jonction 6 ; la seconde lame 4 et la seconde poignée 5 sont reliées par une zone commune de jonction 7.

Les première et seconde zones de jonction 6 et 7 sont disposées l'une contre l'autre, et sont traversées par un pivot 8 constituant un axe d'articulation ou de rotation relatif, entre l'ensemble première lame 2/première poignée 3, et l'ensemble seconde lame 4/seconde poignée 5.

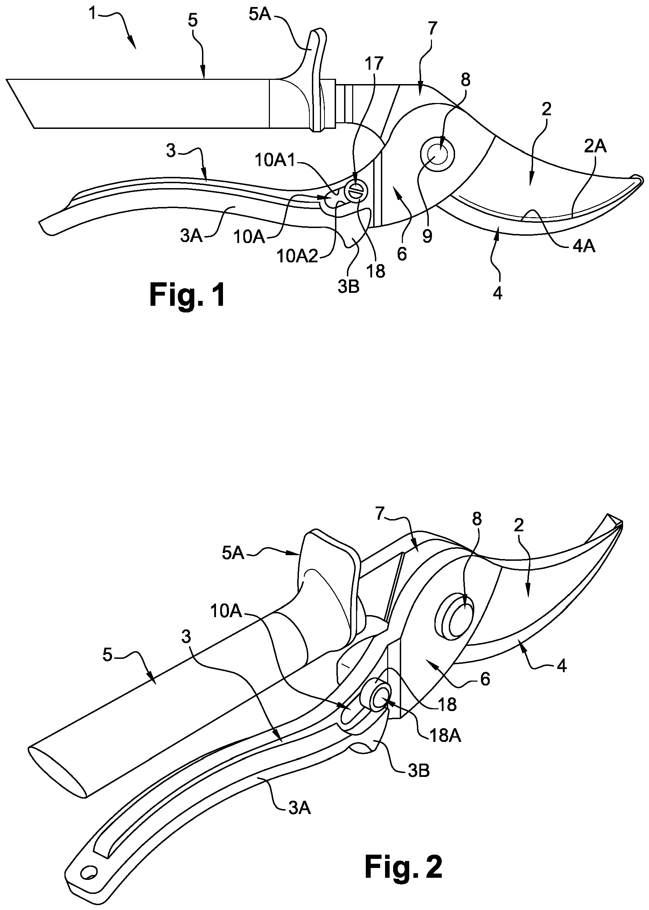

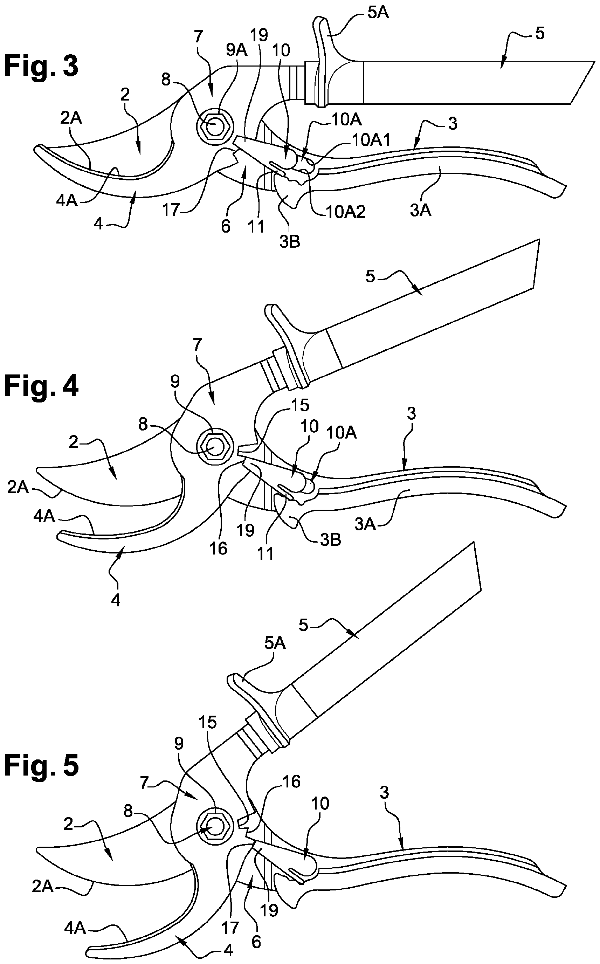

Le pivot 8 comporte à une extrémité une tête en saillie 9A, visible sur la figure 1, et à l'autre extrémité un écrou 9B visible sur les figures 3 à 5.

L'éloignement ou l'écartement des première et seconde poignées respectivement 3 et 5, entraîne l'écartement ou l'éloignement des première et seconde lame respectivement 2 des 4, et donc l'éloignement ou l'écartement des bords tranchants respectifs 2A et 4A desdites larmes.

La première poignée 3 est associée, sur sa partie extérieure (partie inférieure et opposée à la seconde poignée), à un revêtement 3A en matériau semi souple, permettant une meilleure prise par l'utilisateur. Ledit revêtement 3A comporte, à son extrémité tournée vers les zones de jonction 6 et 7, un rebord terminal 3B en saillie vers la bas et formant un élément d'arrêt pour le dernier doigt de l'utilisateur enserrant la poignée 3.

L'utilisateur/trice, de manière connue, saisit l'outil d'une seule main, de manière que la paume de sa main porte contre la seconde poignée 5, son pouce portant également sur la poignée 5, l'extrémité du pouce portant contre un élément d'appui 5A faisant saillie vers le haut (vers l'extérieur et à l'opposée de la première poignée 3) par rapport à la poignée 5 et disposé au niveau de la zone de jonction 6 avec la lame 4. Les doigts repliés enserrent la partie extérieure 3A de la première poignée 3.

Les figures 1, 2 et 3 montrent le sécateur dans sa position fermée où les bords tranchants 2A et 4A des lames 2 et 4 sont soit au contact, soit en chevauchement partiel (de l'ordre de 1 à quelques mm). La figure 4 montre le sécateur pour une position intermédiaire d'ouverture d'écartement des lames 2 et 4, tandis que la figure 5 montre le sécateur dans la position d'ouverture ou d'écartement maximal des lames.

Selon l'invention, le sécateur comporte des moyens de blocage temporaire, susceptibles d'être désactivés à volonté par l'utilisateur, selon notamment trois positions, correspondant chacune à une position écartée au rapprochée des bords tranchants 2A et 4A des lames 2 et 4.

Ces moyens de blocage temporaire sont décrits ci-après en détail en référence aux figures 3 à 8.

Les moyens de blocage temporaire comportent un élément de blocage 10 monté sur la zone de jonction 6 (lame 2/ poignée 3), mobile en fonction du mouvement de rotation de la seconde lame 2 (poignée 5).

L'élément de blocage est apte à coopérer par son extrémité distale avec des premiers éléments de butée 12, 13 et 14 prévus sur la poignée 3, et par son extrémité proximale 19 avec des seconds éléments de butée 15, 16 et 17 prévus au niveau de la zone de jonction 7 (lame 4/poignée 5).

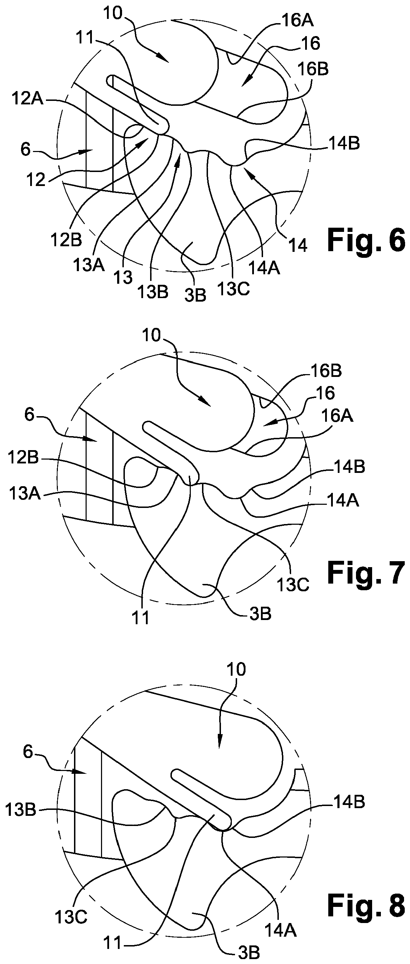

L'extrémité distale de l'élément de blocage 10 qui est opposée à la zone de jonction 6, est munie (latéralement) d'un doigt flexible 11 (visible en détail sur les figures 6 à 8) et apte à coopérer avec une première série de trois premiers éléments de butée 12, 13 et 14 prévus au niveau du rebord terminal 3B de la poignée 3.

Chaque élément de butée 12, 13 et 14 correspond à une position respective des lames 2 et 4, à savoir de fermeture (figure 3), d'ouverture intermédiaire (figure 4) et d'ouverture maximale (figure 5).

Avantageusement, les éléments de butée forment des indentations définissant une série de creux et de bosses, ledit doigt légèrement déformable ou flexible 11 étend apte à coopérer avec un jeu d'un creux et la bosse attenante. En référence aux figures 6 à 8, l'élément de butée 12 comporte une bosse 12A et un creux 12B ; l'élément de butée 13 comporte une bosse 13A entre deux creux 13B et 13C ; l'élément de butée 14 comporte un creux 14A et une bosse 14A.

La déformabilité ou flexibilité du doigt 11 est conçue de manière à permettre le passage des bosses et des creux.

L'extrémité distale de l'élément mobile de blocage 10, qui est opposée au doigt 11, coopère avec les seconds éléments de butée 15, 16 et 17, solidaires de la seconde lame 4 (ou seconde poignée 5). Ces derniers forment des éléments de coopération/engagement mutuel avec l'extrémité distale de l'élément de blocage 10. L'extrémité distale de l'élément de blocage 10 formant une partie mâle, les éléments de butée15, 16 et 17 se présentent sous la formes de trois encoches (figures 3 à 5), correspondant chacune à une position des lames/poignées.

Ledit élément de blocage 10 est monté sur la zone de jonction 6 de manière à pouvoir se déplacer uniquement en translation, selon une direction d'une part correspondant sensiblement à la direction longitudinale de la poignée 3 ou dans une direction oblique du pivot 8 à la poignée 6, et d'autre part dans un plan transversal au pivot 8.

L'élément de blocage 10 est monté mobile en coulissement dans une rainure 10A définissant la direction de translation de ce dernier.

À cette fin, l'élément de blocage 10 est solidaire d'un coulisseau 17 (visible sur les figures 1 et 2 mais pas sur les figures 3 à 5), apte à se déplacer dans la rainure 10A, en portant contre les deux parois inférieure et supérieure 10A1 et 10A2 de ladite rainure. À noter que ledit coulisseau empêche tout autre mouvement, autre que la translation dans la rainure, de l'élément de blocage 10.

Le coulisseau est par exemple serti ou soudé à l'élément de blocage 10 ou venu de matière avec ce dernier. Le coulisseau fait légèrement saillie par rapport à la surface de la zone jonction opposée à l'élément de blocage 10, au travers de la rainure 10A. Le coulisseau est muni d'une tête 18 de vis ou rivet ou tout autre élément empêchant l'élément de blocage 10 de sortir de la rainure 10A.

Le déplacement en translation de l'élément de blocage 10 est provoqué par la rotation de la lame 2 par rapport à la lame 4. Plus précisément, l'extrémité proximale 19 de l'élément de blocage 10, qui est opposée aux lames 2 et 4, est apte à porter contre une seconde série de trois éléments de butée 15, 16 et 17, correspondant chacun aux trois positions fermées, ouverture intermédiaire et ouverture maximale.

Par ailleurs, il est prévu des moyens de rappel tendant à éloigner les bords tranchants 2 à 4 des lames. Ces moyens de rappel sont disposés entre les lames et à proximité de l'axe de rotation de ces dernières. Ceci permet d'éviter que lesdits moyens soient exposés aux poussières et/ou l'humidité, et soient enlevés de manière intempestive.

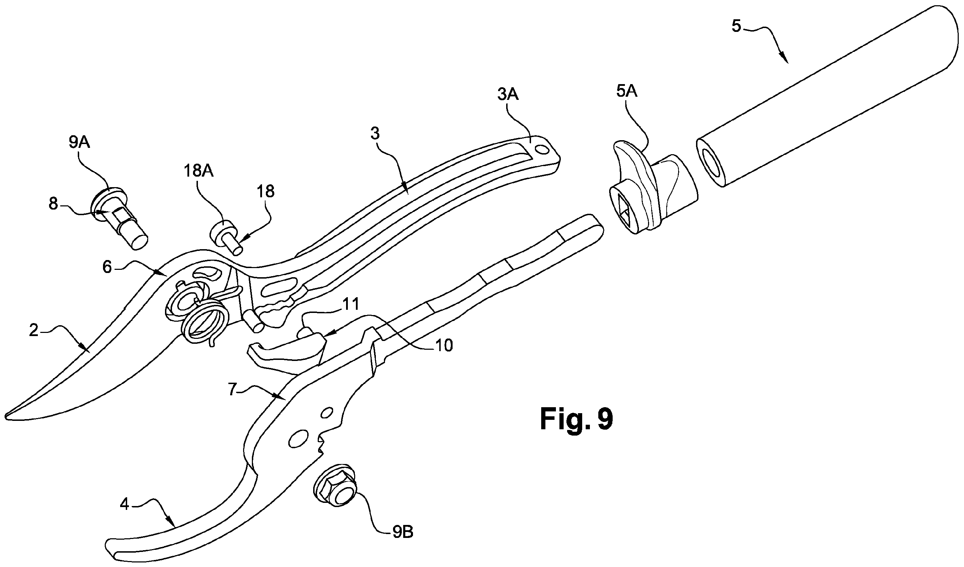

La figure 9 montre une vue en perspective éclatée du sécateur. On retrouve les éléments décrits ci-dessus. Le moyen de rappel est un ressort de torsion à enroulement cylindrique, référencé 20, de type connu en soi, coaxial au pivot 8. Le ressort comporte à chaque extrémité, un doigt en saillie apte à pénétrer en butée dans une lumière prévue sur la partie intérieure de chaque partie de jonction 6 et 7 respective.

Le fonctionnement du sécateur est le suivant.

L'utilisateur saisit l'outil d'une seule main, de manière que la paume de sa main porte contre la seconde poignée 5, son pouce portant également sur la poignée 5, l'extrémité du pouce portant contre un élément d'appui 5A faisant saillie vers le haut (vers l'extérieur et à l'opposée de la première poignée 3) par rapport à la poignée 5 et disposé au niveau de la zone de jonction 6 avec la lame 4. Les doigts repliés enserrent la partie extérieure 3A de la première poignée 3.

Il/elle pousse l'élément 10 avec le pouce pour le déplacer pour obtenir l'ouverture intermédiaire ou l'ouverture maximale

## Revendications

1. Outil coupant, du type sécateur, muni de deux lames (2, 4) à bord tranchant (2A, 4A), articulées en rotation autour d'un axe commun (8), chaque lame étant prolongée par une poignée (3, 5), de manière que l'outil puisse être saisi d'une seule main, comportant des moyens de blocage (10; 12-17) temporaire des lames et des poignées correspondantes, en au moins une position intermédiaire entre la position d'ouverture maximale, et la position de fermeture où les bords tranchants (2A, 4A) des lames (2, 4) sont en contact ou en chevauchement partiel, lesdits moyens de blocage temporaire comportant au moins un élément de blocage (10) monté sur une première des deux lames (4) ou une première poignée (3), ledit élément mobile de blocage (10) est mobile en fonction de la rotation de la seconde lame, ledit élément de blocage présentant à l'une de ses extrémités, celle opposée à la poignée, un doigt (19) qui coopère avec des seconds éléments de butée (15 ; 16 ; 17), solidaires de la seconde lame (4) ou seconde poignée (5), et d'autre part est pourvu à l'autre extrémité d'un doigt flexible (11) et apte à coopérer avec des premiers éléments de butée (12; 13; 14) prévus sur la première lame ou poignée, chaque premier élément de butée correspondant à une des trois positions d'ouverture lames/poignées, respectivement maximale, intermédiaire et fermée, et en ce que ledit élément de blocage (10) possède un degré unique de translation, de direction d'une part transversal à l'axe d'articulation (9) des lames/poignées, et d'autre part sensiblement dans la direction longitudinale de la première lame/poignée.

2. Outil selon la revendication 1, **caractérisé en ce que** les premiers éléments de butée forment des indentations (12-17) définissant une série de creux (12B, 13B, 13C, 14B) et de bosses (12A, 13A, 14A), ledit doigt flexible étant apte à coopérer avec un jeu d'un creux et la bosse attenante, de préférence une série de trois jeux successifs de creux/bosses sont prévus, chacun correspondant à une position d'ouverture des lames.

3. Outil selon l'une des revendications 1 ou 2, **caractérisé en ce que** les seconds éléments de butée (15-17) forment des éléments d'engagement mutuel avec l'extrémité de l'élément mobile de blocage (10), de préférence l'extrémité (19) de l'élément mobile de blocage formant une partie mâle, tandis que les seconds éléments de butée forment des encoches (15, 16, 17), de préférence trois, correspondant chacune à une position des lames/poignées.

4. Outil selon l'une des revendications 1 à 3, **caractérisé en ce que** ledit élément de butée :
- est associé à une rainure (10A) définissant la direction de translation dudit élément de blocage longitudinale, et
- comporte un coulisseau (17) de forme complémentaire à la rainure et apte à n'autoriser qu'un mouvement de translation dudit élément mobile de blocage.

5. Outil selon la revendication 4, **caractérisé en ce que** le coulisseau (17) présente deux faces parallèles de contact avec les parois opposées de la rainure.

6. Outil selon l'une des revendications 1 à 5, **caractérisé en ce qu'**il comporte des moyens de rappel des lames (2, 4) en position ouverte, qui sont disposés entre les lames et à proximité de l'axe de rotation (9) de ces dernières.

7. Outil selon l'une des revendications 1 à 6, **caractérisé en ce qu'**au moins l'une des poignées (5) comporte en saillie et dans une zone proche des lames, un élément d'appui (5A) pour la main de l'utilisateur.

## Patentansprüche

1. Schneidwerkzeug, in der Art einer Gartenschere, das mit zwei Klingen (2, 4) mit Schneidkante (2A, 4A) versehen ist, die um eine gemeinsame Achse (8) herum drehend artikuliert sind, wobei jede Klinge durch einen Griff (3, 5) verlängert ist, damit das Werkzeug mit einer einzigen Hand ergriffen werden kann, Mittel zur vorübergehenden Blockierung (10; 12-17) der Klingen und der entsprechenden Griffe in mindestens einer intermediären Position zwischen der maximalen Öffnungsposition und der Schließposition beinhaltend, in der die Schneidkanten (2A, 4A) der Klingen (2, 4) in Kontakt oder in teilweiser Überschneidung sind, wobei die Mittel zur vorübergehenden Blockierung mindestens ein Blockierelement (10) beinhalten, das auf einer ersten der beiden Klingen (4) oder einem ersten Griff (3) montiert ist, wobei das bewegliche Blockierelement (10) in Abhängigkeit von der Drehung der zweiten Klinge beweglich ist, wobei das Blockierelement an einem seiner Enden, jenem gegenüber dem Griff, einen Stift (19) aufweist, der mit zweiten Anschlagelementen (15; 16; 17) zusammenwirkt, die fest mit der zweiten Klinge (4) oder dem zweiten Griff (5) verbunden sind, und andererseits an dem anderen Ende mit einem flexiblen Stift (11) ausgestattet ist, und imstande ist, mit ersten Anschlagelementen (12; 13; 14) zusammenzuwirken, die an der ersten Klinge oder dem Griff vorgesehen sind, wobei jedes erste Anschlagelement einer der drei Öffnungspositionen von Klingen/Griffen, jeweils maximal, intermediär und geschlossen entspricht, und dadurch, dass das Blockierelement (10) einen einzigen Translationsgrad in eine einerseits querlaufende Richtung zur Artikulationsachse (9) der Klingen/Griffe, und in die andererseits im Wesentlichen Längsrichtung der ersten Klinge/des Griffs besitzt.

2. Werkzeug nach Anspruch 1, **dadurch gekennzeichnet, dass** die ersten Anschlagelemente Einbuchtungen (12-17) bilden, die eine Reihe von Mulden (12B, 13B, 13C, 14B) und Buckeln (12A, 13A, 14A) definieren, wobei der flexible Stift imstande ist, mit einem Satz einer Mulde und dem angrenzenden Buckel zusammenzuwirken, wobei vorzugsweise eine Reihe von drei aufeinanderfolgenden Sätzen von Mulden/Buckeln vorgesehen sind, wobei jeder einer Öffnungsposition der Klingen entspricht.

3. Werkzeug nach einem der Ansprüche 1 oder 2, **dadurch gekennzeichnet, dass** die zweiten Anschlagelemente (15-17) Elemente zum gegenseitigen Eingreifen mit dem Ende des beweglichen Blockierelements (10), vorzugsweise dem Ende (19) des beweglichen Blockierelements, das einen Steckabschnitt bildet, bilden, während die zweiten Anschlagelemente vorzugsweise drei Rillen (15, 16, 17) bilden, die jeweils einer Position der Klingen/Griffe entsprechen.

4. Werkzeug nach einem der Ansprüche 1 bis 3, **dadurch gekennzeichnet, dass** das Anschlagelement:
- einer Einkerbung (10A) zugeordnet ist, die die Translationsrichtung des länglichen Blockierelements definiert, und
- einen Stößel (17) in einer ergänzenden Form zur Einkerbung beinhaltet und in der Lage ist, um nur eine Translationsbewegung des beweglichen Blockierelements freizugeben.

5. Werkzeug nach Anspruch 4, **dadurch gekennzeichnet, dass** der Stößel (17) zwei parallele Kontaktflächen mit den gegenüberliegenden Wänden der Einkerbung aufweist.

6. Werkzeug nach einem der Ansprüche 1 bis 5, **dadurch gekennzeichnet, dass** es Mittel zum Rückstellen der Klingen (2, 4) in die offene Position beinhaltet, die zwischen den Klingen und in der Nähe der Drehachse (9) von letzteren angeordnet sind.

7. Werkzeug nach einem der Ansprüche 1 bis 6, **dadurch gekennzeichnet, dass** mindestens einer der Griffe (5) überstehend und in einer Zone nahe den Klingen ein Abstützelement (5A) für die Hand des Nutzers beinhaltet.

## Claims

1. A cutting tool, such as a pruning shear, provided with two blades (2, 4) with a sharp edge (2A, 4A), hinged in rotation about a common axis (8), each blade being extended by a handle (3, 5), so that the tool can be grasped with only one hand, including means for temporarily blocking (10; 12-17) the corresponding blades and handles, in at least one intermediate position between the maximum open position, and the closed position where the sharp edges (2A, 4A) of the blades (2, 4) are in contact or partially overlapped, said temporary blocking means including at least one blocking member (10) mounted on a first one of the two blades (4) or on a first handle (3), said movable blocking member (10) is movable according to the rotation of the second blade, said blocking member is, on the one hand, provided at one of its ends, the one opposite to the handle, with a finger (19) that cooperates with second abutment members (15; 16; 17), secured to the second blade (4) or second handle (5) and, on the other hand, provided at the other end, with a flexible finger (11) and able to cooperate with first abutment members (12; 13; 14) provided on the first blade or handle, each first abutment member corresponding to one of the three blades/handles open positions, respectively maximum, intermediate and closed position, and said blocking member (10) has a single degree of translation, on the one hand, transverse to the hinge axis (9) of the blades/handles and, on the other hand, substantially in the longitudinal direction of the first blade/handle.

2. The tool according to claim 1, **characterized in that** the first abutment members form indentations (12-17) defining a series of recesses (12B, 13B, 13C, 14B) and bumps (12A, 13A, 14A), said flexible finger being able to cooperate with a set of a recess and the adjacent bump, preferably a series of three successive sets of recesses/bumps are provided, each corresponding to an open position of the blades.

3. The tool according to any of claims 1 or 2, **characterized in that** the second abutment members (15-17) form members mutually engaging with the end of the movable blocking member (10), preferably the end (19) of the movable blocking member forming a male portion, while the second abutment members form notches (15, 16, 17), preferably three notches, each corresponding to a position of the blades/handles.

4. The tool according to any of claims 1 to 3, **characterized in that** said abutment member:
- is associated with a groove (10A) defining the direction of translation of said longitudinal blocking member, and
- includes a slider (17) of a shape complementary to the groove and able to allow only a translational movement of said movable blocking member.

5. The tool according to claim 4, **characterized in that** the slider (17) has two parallel faces of contact with the opposite walls of the groove.

6. The tool according to any of claims 1 to 5, **characterized in that** it includes means for returning the blades (2, 4) in the open position, which are disposed between the blades and close to the axis of rotation (9) of the latter.

7. The tool according to any of claims 1 to 6, **characterized in that** at least one of the handles (5) includes in protrusion and in an area close to the blades, a bearing member (5A) for the user's hand.
